# EUROPEAN PATENT SPECIFICATION

(11) **EP 1 752 045 B1**
(45) Date of publication and mention of the grant of the patent: **20.08.2008**
(21) Application number: 06015445.7
(22) Date of filing: 25.07.2006
(51) Int. Cl.: A22C 11/00

(54) **Machine for tying pork meat in casings by means of twines**
Maschine zum Schnüren von Schweinefleisch
Système de liage pour la viande porcine

(30) Priority: 08.08.2005 IT MN20050051
(43) Date of publication of application: 14.02.2007
(73) Proprietor: INOX MECCANICA S.R.L., 46040 Goito (Prov. of Mantova) (IT)
(72) Inventor: Bolzacchini, Giovanni, 46040 Solarolo di Goito (MN) (IT)
(74) Representative: Alagem Modiano, Lara S.

(56) References cited:
- EP-A- 0 058 735
- EP-A1- 0 268 206
- FR-A1- 2 530 580
- US-A- 2 328 085

## Description

The invention relates to an improved machine for tying pork meat in casings by means of twines.

It is known that pork meat stuffed in a casing, such as for example coppa and bacon, is tied by means of retaining strings, known as twines, which run longitudinally from the head to the tail of the pork meat.

It is of course unthinkable to perform by hand the tying of pork meat produced in industrial plants, and accordingly machines adapted for this purpose have been devised.

US-A-2328085 discloses an apparatus for application of cords to sausage casings, including a guidway to direct the sausage in a path of advancement having an annular member provided with a throat through which the sausage is moved, a plurality of cord guides spaced circumferentially around the throat for guiding cords in spaced relation longitudinally along the sausage as it is moved through the throat, a die member positioned beyond the throat for supporting and shaping the sausage, a cylindrical supporting member sapced from, the die, a member mounted for rotation about the sausage as the latter is advanded through the die and the cylindrical supporting member to wind a cord spirally around the sausage and over the longtidinal cords through the space between the die and the cylindrical member, and a mechanism to supply cords to the guides and cord winding means with a predetermined degree of tension of the cords.

Italian Patent Application MN2002A000034 by the same Applicant discloses a machine of the cited type, but continuing study has allowed to devise the improved machine, which is designed to provide high productivity with maximum safety and precision in operation.

This aim is achieved by an improved machine for tying pork meat in casings by means of twines, according to the invention, characterized in that it comprises the features disclosed in the appended claims.

Further characteristics and advantages of the machine according to the present invention will become better apparent from the description of a preferred but not exclusive embodiment thereof, illustrated by way of non-limiting example in the accompanying drawings, wherein:
Figure 1 is a perspective view of the machine according to the invention at the beginning of a cycle for processing pork meat;
Figure 2 is a view of a detail of Figure 1, with a portion removed for clarity;
Figures 3, 5, 7 are sectional views, taken along the line III-III of Figure 2, during different steps of operation;
Figures 4, 6, 8 are sectional views, taken along the line IV-IV of Figure 2, in steps that correspond to the preceding figures;
Figure 9 is a view of a detail of the machine in a different situation with respect to the one shown in Figure 2.

With reference to the figures, the reference numeral 1 generally designates the footing of the machine, on which there is a structure which comprises a cradle 2 for supporting pork meat 3 when it is introduced in the machine at the beginning of the processing cycle, and a magazine 4 for spools 5, for winding twines; a pusher 6, actuated by an actuation cylinder inserted in a housing 7, determines the translational motion of the pork meat, introducing it in a fixed tube 8 through the first end thereof, which leads to the cradle 2.

The fixed tube 8 is provided monolithically, at the second end, with a flange 9, which is provided with holes 9a for the passage of the twines, as described in greater detail hereinafter.

Reference numeral 10 further designates a tube which is arranged inside the fixed tube 8 coaxially thereto and is provided with means for movement in an axial direction which comprise a stem 11 and a corresponding symmetrically arranged stem, not shown in the figures, which is actuated by an actuation cylinder 11a and is connected at its end to a first flange 12, which is fixed monolithically to the tube 10 at the end that protrudes from the second end of the fixed tube 8.

A second flange 13 is rigidly coupled to the stem 11 and to the corresponding symmetrically arranged stem and is therefore rigidly coupled also to the tube 10 and to the first flange 12 thereof, and is arranged so that it can slide at the peripheral region of the fixed tube 8.

The first flange 12 and the second flange 13 are provided with holes 12a, 13a, for guiding the twines, which are shown in broken lines, such holes being aligned with the holes 9a of the flange 9, such as to orient each of the flanges parallel to the axis of the tubes 8 and 10, as explained hereinafter.

Of course, the twines may be any in number, and for this purpose, on the described flanges a plurality of holes are provided for evenly distributing said twines regardless of their number.

The flange 13 is provided with means which allow to vary the sliding conditions of the twines in passing through the holes 13a provided in said flange, and said means, in the described embodiment, assume a per se known configuration, comprising three flanges 14, 15, 16 provided with holes for the passage of the twines, which correspond to the holes provided in the flange 13: thus, for example, at the hole 13a there are, in the flanges 14, 15, 16, respectively the holes 14a,15a, 16a. While the external flanges 14 and 16 are rigidly coupled to each other, the intermediate flange 15 is provided with movement means, which comprise an actuation cylinder 17 supported by the flange 13, so as to allow the operations detailed during the description of operation.

The machine according to the invention also comprises a twine tensioning device, generally designated by the reference numeral 18, provided with movement means at the peripheral region of the fixed tube 8 which comprise two actuation cylinders 19 which are arranged symmetrically.

The device 18 comprises a flange 20, which is provided with holes for the passage of the twines that arrive from the spools 5, said holes being aligned with the holes provided in said flanges, and thus, for example, reference numeral 20a designates the hole aligned with the holes 12a, 9a, 13a, and the flange 20 is provided with means which allow selectively the free passage of the twines and the locking of said twines, which assume the same shape as the means with which the flange 13 is provided, and thus comprise three flanges 21, 22, 23 provided with twine passage holes that correspond to the holes provided in the flange 20, such as for example 21a, 22a, 23a at the hole 20a; the two outer flanges 21 and 23 are rigidly coupled to each other and the central flange 22 is moved by means of an actuation cylinder 24 supported by the flange 20.

At this point it is possible to follow, for the sake of completeness, the entire path of a twine within the machine.

Consider, for example, the twine designated by reference numeral 25a in the portion that arrives from a spool: said twine enters the hole 20a of the flange 20 of the tensioning device and runs with the portion 25b straight and parallel to the axis of the tubes 8 and 10, entering the holes 13a, 9a, 12a provided respectively in the flanges 13, 9, 12, and then has a portion 25c beyond the hole 12a of the flange 12, as clearly explained in the description of operation.

Continuing in the description of the machine, it is noted that a clipping unit 26 is provided, which is inserted with its actuation elements, which comprise clamps 26a with corresponding collection units 26b, 26c, between the flange 9 arranged at the end of the fixed tube 8 and a roller bed 27, and finally the reference numerals 28 and 29 designate two jaws which are adapted to make contact, with differentiated pressures, following actuation by means of actuation cylinders 28a, 29a, with the pork meat 3 which rests on the roller bed 27.

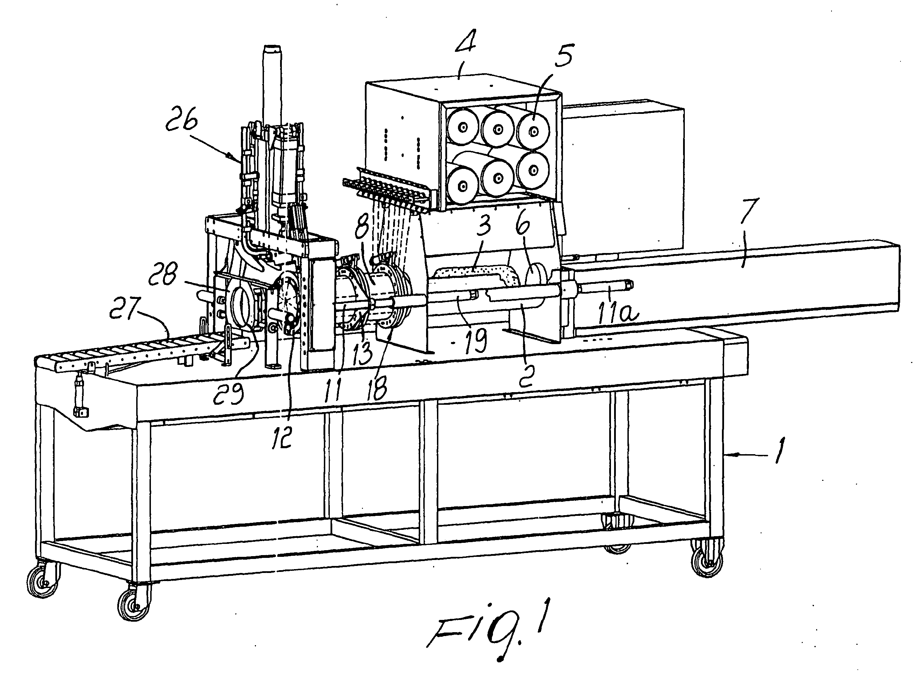

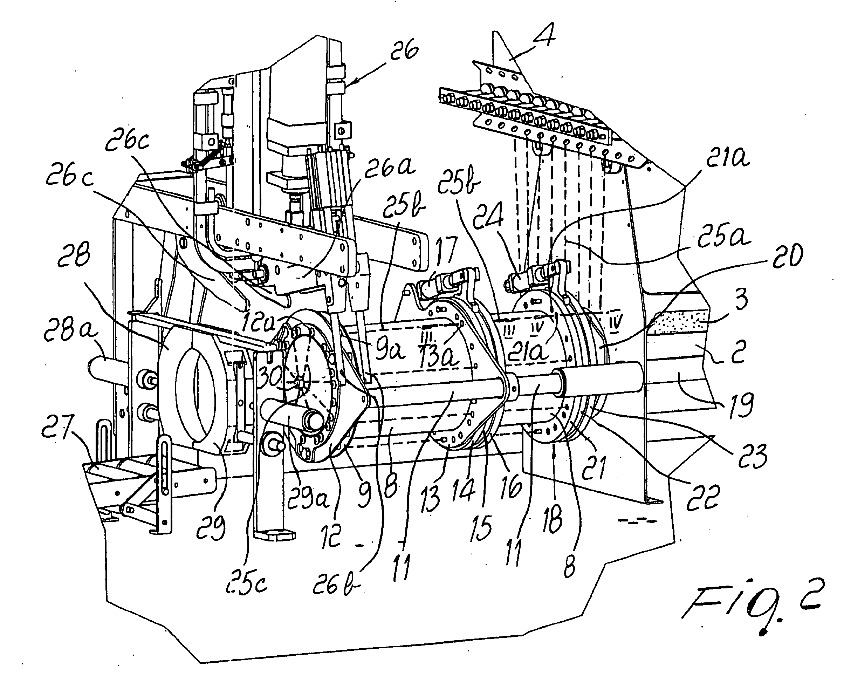

The operation of the invention with hemp twines is now described starting from the situation shown in Figures 1, 2, 3, 4, in which the processing cycle on pork meat begins.

In this situation, the pusher 6 is at the internal stroke limit, the tensioning device 18 is at the rightward stroke limit, in the condition in which the twines slide freely, and this applies also to the internal tube 10, with the corresponding flanges rigidly coupled thereto, the clipping unit 26 is open, and the jaws 28 and 29 are closed with a low pressure.

The twines are well taut in contact with the flange 12 and are gathered at the center by a clip 30 applied during the previous processing cycle.

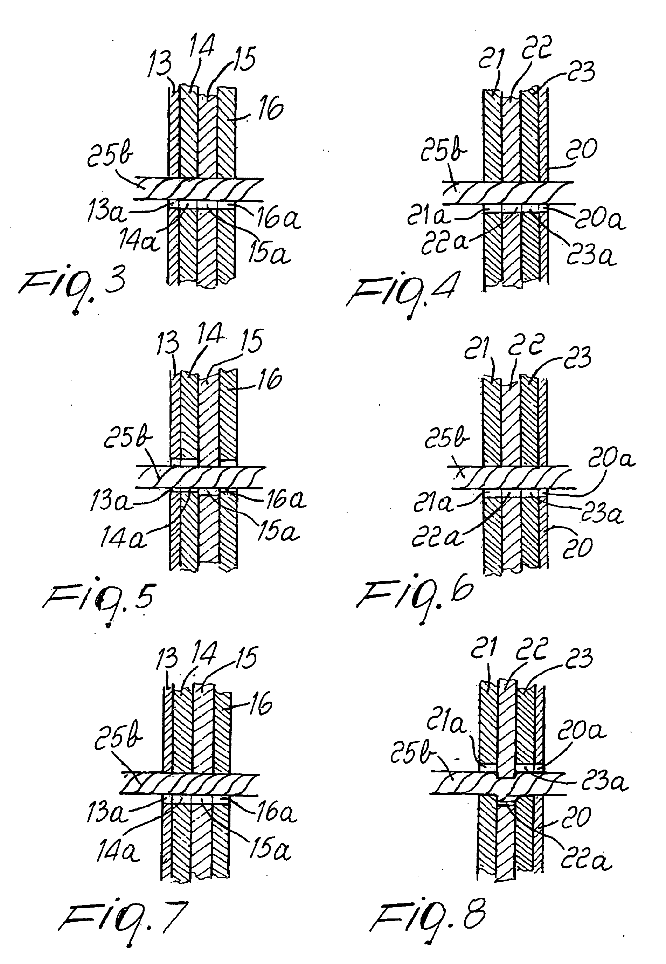

The pusher 6 starts, and when the pork meat 3 is inserted in the tubes, while said pusher continues its stroke, the internal tube 10 and the tensioning device 18 start; while the tensioning device remains in the condition for the free passage of the twines shown in Figure 6, the means connected to the flange 13 are arranged as shown in Figure 5, so as to produce a certain friction on the twines.

In other words, a step occurs in which the twines are perfectly guided in a condition of optimum tension for retention in position.

When the tube 10 and the tensioning device 18 arrive at the stroke limit, the pusher 6 continues its action until the pork meat 3, which has made contact with the twines clipped at 30 at the head, has the head on the roller bed 27 while the body is between the jaws 28 and 29.

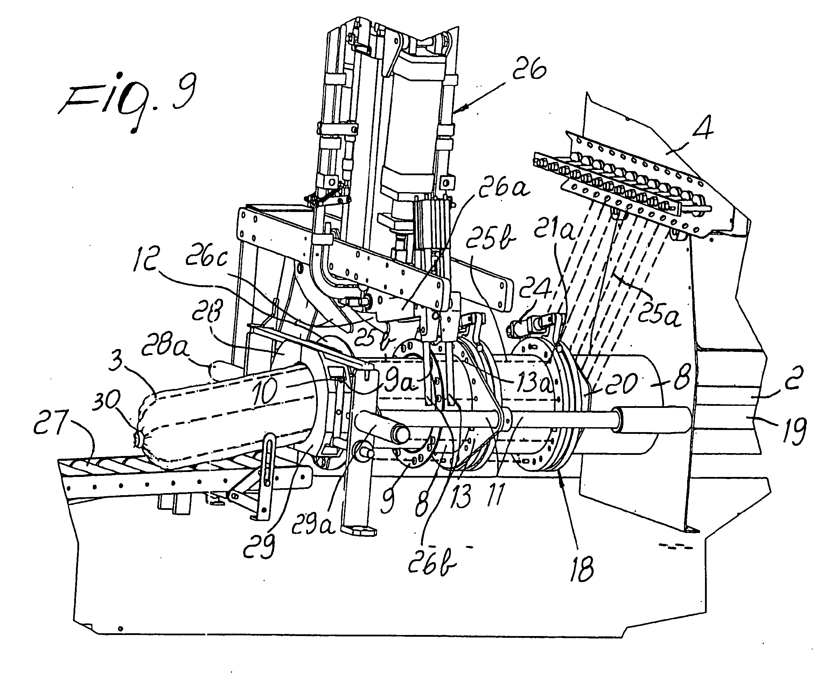

The situation shown in Figures 5, 6, 9 is thus reached: the pusher 6, the inner tube 10 and the tensioning device 18 are at the outer stroke limit, in such conditions as to produce friction when the twines pass through the flange 13, while the passage through the flange 20 is free, as shown in Figures 5 and 6, the clipping unit 26 is open and the jaws 28, 29 are closed with low pressure.

While the pusher 6 restarts for the return stroke and the pressure on the jaws 28, 29 increases to lock the twines on the pork meat and retain said pork meat, the inner tube 10 starts in the condition for free passage of the twines, and when it reaches the rightward stroke limit in the tensioning device 18, which in the meantime has remained stationary, a change occurs which leads to the locking of the twines: the situation is now the one shown in Figures 7 and 8, which is the ideal one to close the collecting elements 26b, 26c of the clipping unit 26.

At this point, the tensioning device 18 moves to the right, while the pressure on the jaws 28 and 29 decreases, and stops before the stroke limit when the twine tensioning force is the one set as optimum for performing the clipping and cutting operations.

While the pork meat 3 falls onto the roller bed 27 arranged so as to receive it, the tensioning device 18 reaches the rightward stroke limit, pulling the twines against the flange 12, and everything is ready for a new cycle.

The described invention is susceptible of numerous modifications and variations, all of which are within the scope of the appended claims: thus, for example, if elastic twines are used, the configuration of the machine may omit the tensioning device 18 and the means with which the flange 13 is provided might be able to lock said twines.

The means with which the flanges are provided may also assume any shape, and the flange 9 may also be omitted; moreover, the passage holes of each twine arranged in the various described flanges might not be aligned.

The tube 10 may be omitted, to be replaced by a roller bed provided with movement means, such as to keep the twines in the correct position.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine for tying pork meat in casings by means of twines, comprising;
- a fixed tube (8) for conveying the pork meat (3), which is open at a first end on a cradle (2) for inserting said pork meat (3) and leads, at the second end, proximate to a roller bed (27) for supporting the pork meat (3);
- means (10) adapted to follow the product at the outlet of said fixed tube (8), so as to keep the twines in the correct position;
- at least one device adapted to perform a translational motion at the peripheral region of the fixed tube (8), which comprises a flange (12;20) provided with twine passage holes (12a;20a) and further provided with means (14-17;21-24) which allow selectively variations of the twine passage conditions and comprise at least the free passage and the locking of said twines;
- a pusher (6) adapted to determine the translational motion of the pork meat (3) between the position in which it rests within the cradle (2) and a stroke limit position in which it rests on the roller bed (27);
- a clipping machine (26) arranged between the second end of the fixed tube (8) and the roller bed (27);
- jaws (28,29) adapted to come into contact, with differentiated pressures, with the pork meat (3) resting on the roller bed (27).

2. The machine according to claim 1, **characterized in that** the means adapted to follow the product at the outlet of the fixed tube (8) comprise a tube (10), which is provided with means (11) for movement in an axial direction, is arranged inside the fixed tube (8) and is coaxial thereto and comprises a flange (12) which is fixed monolithically at the end that protrudes from the second end of the fixed tube (8) and is provided with twine guiding holes (12a).

3. The machine according to claim 2, **characterized in that** the flange (12) fixed monolithically to the end of the tube (10) arranged inside the fixed tube (8) is provided with means (14-17) which allow selectively variations of the passage conditions of the twines, said conditions comprising at least the free passage and the locking of said twines.

4. The machine according to one or more of the preceding claims, **characterized in that** it comprises a device which is adapted to perform a translational motion at the peripheral region of the fixed tube (8) and comprises a flange (20) provided with holes (20a) for the passage of the twines that arrive from spools (5) supported by the structure of the machine, and further provided with means (21-24) adapted to allow selectively variations of the passage conditions of the twines, said conditions comprising at least the free passage and the locking of said twines.

5. The machine according to claim 4, **characterized in that** the device adapted to perform a translational motion at the peripheral region of the fixed tube (8) is provided with autonomous actuation means.

6. The machine according to claim 4, **characterized in that** the device adapted to perform a translational motion at the peripheral region of the fixed tube is rigidly coupled to the movable tube (10) located inside said fixed tube (8).

7. The machine according to one or more of the preceding claims, **characterized in that** it comprises two devices adapted to perform a translational motion at the peripheral region of the fixed tube, each device comprising a flange (12;20) provided with twine passage holes (12a;20a) and further provided with means (14-17;21-24) which allow selectively variations of the twine passage conditions, said conditions comprising at least the free passage and the locking of said twines, one of said devices (12) being rigidly coupled to the movable tube (10) arranged inside the fixed tube (8), the other device (20) being provided with autonomous actuation means.

8. The machine according to claim 1, **characterized in that** the means adapted to follow the product at the outlet of the fixed tube comprise a roller bed (27) provided with movement means.

9. The machine according to one or more of the preceding claims, **characterized by** the presence of a flange (9) which is rigidly coupled to the second end of the fixed tube (8) and is provided with twine passage holes (9a).

10. The machine according to one or more of the preceding claims, **characterized in that** the twine passage holes (9a;12a;20a) of each of the twines arranged within the flanges (9,12,20) crossed by said twines are aligned in a direction which is parallel to the axis of the fixed and movable tubes (8,10).

## Patentansprüche

1. Eine Maschine zum Schnuren von Schweinefleisch in Umhüllungen mit Hilfe von Zwirn, die Folgendes umfasst:
- ein festes Rohr (8) zum Befördern des Schweinefleischs (3), das an einem ersten Ende an einem Gestell (2) offen ist, zum Einführen des Schweinefleischs (3), und das an dem zweiten Ende in die Nähe eines Rollgangs (27) zum Tragen des Schweinefleischs (3) führt,
- Mittel (10), die ausgebildet sind, um dem Produkt am Auslass des festen Rohrs (8) zu folgen, um den Zwirn in der korrekten Position zu halten,
- mindestens eine Vorrichtung, die ausgebildet ist, um im peripheren Bereich des festen Rohrs (8) eine translatorische Bewegung durchzuführen, die einen Flansch (12; 20) umfasst, die mit Zwirn-Durchgangslöchern .(12a; 20a) versehen ist, und die weiter mit Mitteln (14-17; 21-24) versehen ist, die selektiv Variationen der Zwirndurchgangsbedingungen ermöglichen und mindestens den freien Durchgang und das Festsetzen des Zwirns umfassen,
- einen Vorschubschieber (6), ausgebildet, um die translatorische Bewegung des Schweinefleischs (3) zwischen der Position zu bestimmen, in der es in dem Gestell (2) ruht, und einer Hubbegrenzungs-Position, in welcher es auf dem Rollgang (27) ruht,
- eine Abschneidemaschine (26), die zwischen dem zweiten Ende des festen Rohrs (8) und dem Rollgang (27) angeordnet ist,
- Backen (28, 29), die ausgebildet sind, um mit verschiedenen Drücken mit dem Schweinefleisch (3) in Kontakt zu kommen, das auf dem Rollgang (27) ruht.

2. Die Maschine gemäß Anspruch 1, **dadurch gekennzeichnet, dass** die Mittel, die ausgebildet sind, um dem Produkt am Auslass des festen Rohrs (8) zu folgen, ein Rohr (10) umfassen, das mit Mitteln (11) zur Bewegung in eine axiale Richtung ausgestattet ist, das innerhalb des festen Rohrs (8) angeordnet ist und das koaxial dazu ist, und einen Flansch (12) umfasst, der monolithisch an dem Ende befestigt ist, das aus dem zweiten Ende des festen Rohrs (8) herausragt, und mit Zwirn-Durchgangslöchern (12a) versehen ist.

3. Die Maschine gemäß Anspruch 2, **dadurch gekennzeichnet, dass** der Flansch (12), der monolithisch an dem Ende des Rohrs (10) befestigt ist, welches in dem festen Rohr (8) angeordnet ist, mit Mitteln (14-17) ausgestattet ist, welche selektiv Variationen der Durchgangsbedingungen des Zwirns ermöglichen, wobei die Bedingungen mindestens den freien Durchgang und das Festsetzen des Zwirns umfassen.

4. Die Maschine gemäß einem oder mehreren der obigen Ansprüche, **dadurch gekennzeichnet, dass** sie eine Vorrichtung umfasst, die ausgebildet ist, um eine translatorische Bewegung im peripheren Bereich des festen Rohrs (8) durchzuführen, und einen Flansch (20) umfasst, der mit Löchern (20a) zum Hindurchdringen des Zwirns ausgestattet ist, welcher von Spulen (5) kommt, die von der Struktur der Maschine getragen werden, und weiter mit Mitteln (21-24) ausgestattet ist, die ausgebildet sind, um selektiv Variationen der Durchgangsbedingungen des Zwirns zu ermöglichen, wobei die Bedingungen mindestens den freien Durchgang und das Festsetzen des Zwirns umfassen.

5. Die Maschine gemäß Anspruch 4, **dadurch gekennzeichnet, dass** die Vorrichtung, die ausgebildet ist, um eine translatorische Bewegung im peripheren Bereich des festen Rohrs (8) durchzuführen, mit autonomen Betätigungsmitteln ausgestattet ist.

6. Die Maschine gemäß Anspruch 4, **dadurch gekennzeichnet, dass** die Vorrichtung, die ausgebildet ist, um eine translatorische Bewegung im peripheren Bereich des festen Rohrs durchzuführen, starr mit dem beweglichen Rohr (10) gekoppelt ist, das sich in dem festen Rohr (8) befindet.

7. Die Maschine gemäß einem oder mehreren der obigen Ansprüche, **dadurch gekennzeichnet, dass** sie zwei Vorrichtungen umfasst, die ausgebildet sind, um eine translatorische Bewegung im peripheren Bereich des festen Rohrs durchzuführen, wobei jede Vorrichtung einen Flansch (12; 20) umfasst, der mit Zwirn-Durchgangslöchern (12a; 20a) versehen ist, und weiter mit Mitteln (14-17; 21-24) ausgestattet ist, die selektiv Variationen der Zwirn-Durchgangsbedingungen ermöglichen, wobei die Bedingungen mindestens den freien Durchgang und das Festsetzen des Zwirns umfassen und eine der Vorrichtungen (12) starr mit dem beweglichen Rohr (10) gekoppelt ist, das innerhalb des festen Rohrs (8) angeordnet ist, wobei die andere Vorrichtung (20) mit autonomen Betätigungsmitteln ausgestattet ist.

8. Die Maschine gemäß Anspruch 1, **dadurch gekennzeichnet, dass** die Mittel, die ausgebildet sind, um dem Produkt am Auslass des festen Rohrs zu folgen, einen Rollgang (27) umfassen, der mit Bewegungsmitteln versehen ist.

9. Die Maschine gemäß einem oder mehreren der obigen Ansprüche, **gekennzeichnet durch** die Anwesenheit eines Flanschs (9), der starr mit dem zweiten Ende des festen Rohrs (8) gekoppelt und mit Zwirn-Durchgangslöchern (9a) versehen ist.

10. Die Maschine gemäß einem oder mehreren der obigen Ansprüche, **dadurch gekennzeichnet, dass** die Zwirn-Durchgangslöcher (9a; 12a; 20a) jedes der Zwirnfäden, die innerhalb der von den Zwirnfäden gekreuzten Flansche (9, 12, 20) angeordnet sind, in eine Richtung ausgerichtet sind, die parallel zur Achse des festen und des beweglichen Rohrs (8, 10) ist.

## Revendications

1. Machine pour liage de viande porcine dans des boites au moyen de ficelles, comprenant :
- un tube fixe (8) pour transporter la viande porcine (3), qui est ouvert à une première extrémité sur un berceau (2) pour insérer ladite viande porcine (3) et des fils, à la seconde extrémité, proche d'un chemin de roulement (27) pour supporter la viande porcine (3) ;
- des moyens (10) adaptés pour suivre le produit à la sortie dudit tube fixe (8), de façon à maintenir les ficelles dans la bonne position ;
- au moins un dispositif adapté pour réaliser un mouvement de translation dans la zone périphérique du tube fixe (8), qui comprend une bride (12,20) dotée d'orifices de passage de ficelle (12a, 20a) et en outre dotée de moyens (14-17, 21-24) qui permettent des variations sélectives des conditions de passage de ficelle et comprennent au moins le passage libre et le blocage desdites ficelles ;
- un pousseur (6) adapté pour déterminer le mouvement de translation de la viande porcine (3) entre la position dans laquelle elle s'appuie dans le berceau (2) et une position de limite de course dans laquelle elle s'appuie sur le chemin de roulement (27) ;
- une machine de coupe (26) disposée entre la seconde extrémité du tube fixe (8) et le chemin de roulement (27) ;
- des mâchoires (28, 29) adaptées pour entrer en contact, avec des pressions différenciées, avec la viande porcine (3) reposant sur le chemin de roulement (27).

2. Machine selon la revendication 1, **caractérisée en ce que** les moyens adaptés pour suivre le produit à la sortie du tube fixe (8) comprennent un tube (10) qui est doté de moyens (11) pour le mouvement dans un sens axial, est disposé à l'intérieur du tube fixe (8) et est coaxial par rapport à celui-ci et comprend une bride (12) qui est fixée de manière monolithique à l'extrémité qui ressort de la seconde extrémité du tube fixe (8) et est dotée d'orifices de guidage de ficelle (12a).

3. Machine selon la revendication 2, **caractérisée en ce que** la bride (12) fixée de manière monolithique à l'extrémité du tube (10) disposé à l'intérieur du tube fixe (8) est dotée de moyens (14-17) qui permettent des variations sélectives des conditions de passage des ficelles, lesdites conditions comprenant au moins le passage libre et le blocage desdites ficelles.

4. Machine selon une ou plusieurs des revendications précédentes, **caractérisée en ce qu'**elle comprend un dispositif qui est adapté pour effectuer un mouvement de translation dans la région périphérique du tube fixe (8) et comprend une bride (20) dotée d'orifices (20a) pour le passage des ficelles qui arrivent de bobines (5) supportées par la structure de la machine, et dotée en outre de moyens (21-24) adaptés pour permettre des variations sélectives des conditions de passage des ficelles, lesdites conditions comprenant au moins le passage libre et le blocage desdites ficelles.

5. Machine selon la revendication 4, **caractérisée en ce que** le dispositif adapté pour effectuer un mouvement de translation dans la zone périphérique du tube fixe (8) est doté de moyens d'actionnement autonomes.

6. Machine selon la revendication 4, **caractérisée en ce que** le dispositif adapté pour effectuer un mouvement de translation dans la zone périphérique du tube fixe est couplé de manière rigide au tube mobile (10) situé à l'intérieur dudit tube fixe (8).

7. Machine selon une ou plusieurs des revendications précédentes, **caractérisée en ce qu'**elle comprend deux dispositifs adaptés pour effectuer un mouvement de translation dans la zone périphérique du tube fixe, chaque dispositif comprenant une bride (12, 20) dotée d'orifices de passage de ficelle (12a, 20a) et en outre dotée de moyens (14-17, 21-24) qui permettent des variations sélectives des conditions de passage des ficelles, lesdites conditions comprenant au moins le passage libre et le blocage desdites ficelles, un desdits dispositifs (12) étant couplé de façon rigide au tube mobile (10) disposé à l'intérieur du tube fixe (8), l'autre dispositif (20) étant doté de moyens d'actionnement autonomes.

8. Machine selon la revendication 1, **caractérisée en ce que** les moyens adaptés pour suivre le produit à la sortie du tube fixe comprennent un chemin de roulement (27) doté de moyens de mouvement.

9. Machine selon une ou plusieurs des revendications précédentes, **caractérisée par** la présence d'une bride (9) qui est couplée de manière rigide à la seconde extrémité du tube fixe (8) et est dotée d'orifices de passage de ficelle (9a).

10. Machine selon une ou plusieurs des revendications précédentes, **caractérisée en ce que** les orifices de passage de ficelle (9a, 12a, 20a) de chacune des ficelles disposés dans les brides (9, 12, 20), traversées par lesdites ficelles, sont alignés dans une direction qui est parallèle à l'axe des tubes fixe et mobile (8, 10).
